(19) Europäisches Patentamt
European Patent Office
Office européen des brevets

(11) EP 1 602 780 B1

(12) EUROPEAN PATENT SPECIFICATION

(45) Date of publication and mention
of the grant of the patent:
**09.04.2008 Bulletin 2008/15**

(51) Int Cl.:
*D07B 1/06* (2006.01)

(21) Application number: **05016172.8**

(22) Date of filing: **11.09.2001**

(54) **Steel cord for tire and radial tire**

Stahlseil für Luftreifen sowie radialer Luftreifen

Câble d'acier pour pneumatique et pneumatique radial

(84) Designated Contracting States:
**DE FR IT**

(30) Priority: **11.09.2000 JP 2000275108**
**11.09.2000 JP 2000275114**

(43) Date of publication of application:
**07.12.2005 Bulletin 2005/49**

(62) Document number(s) of the earlier application(s) in
accordance with Art. 76 EPC:
**01121613.2 / 1 186 699**

(73) Proprietor: **THE YOKOHAMA RUBBER CO., LTD.**
**Tokyo (JP)**

(72) Inventors:
• **Hirachi, Minoru**
**Hiratsuka-shi**
**Kanagawa-ken (JP)**
• **Imamiya, Susumu**
**Hiratsuka-shi**
**Kanagawa-ken (JP)**

(74) Representative: **HOFFMANN EITLE**
**Patent- und Rechtsanwälte**
**Arabellastrasse 4**
**81925 München (DE)**

(56) References cited:
**DE-A1- 2 648 524          US-A- 4 005 610**
**US-A- 6 007 912**

EP 1 602 780 B1

**Description**

BACKGROUND OF THE INVENTION

The present invention relates to a steel cord for a tire and a radial tire using the steel cord, in particular relates to a steel cord for a tire and a radial tire with improvements to increase a corrosion resistance and durability of a completed tire product and improve the energy efficiency during curing.

For a carcass layer (carcass member), a bead reinforcing layer (finishing member) and a part of a belt layer (belt member) of a radial tire for a heavy load, a steel cord having an m+n twist structure comprising a core containing m pieces of wires and a sheath containing n pieces of wires, or a steel cord winding a wrapping wire around the former, and the like are used. To these members, an extreme bending deformation is given when the tire runs. Because of this, the wire of the steel cord is between 0.15 mm and 0.22 mm in diameter, which is smaller than an ordinary cord for a belt, and in order to minimize a strain caused on the surface of each wire by bending and make the strain uniform, as possible, generally a cord composition having a cross-sectional shape with wires arranged densely and coaxially is selected.

In the case of steel cords with these compositions, of which a gap between wires is small at an outermost sheath part due to the cross-sectional shape, a sheathing rubber cannot fill a space between core and sheath in a rubber sheathing process and a curing process, and the space remains as a cavity in a completed tire. Moreover, the cavity works as a passage of air, air containing moisture, or moisture.

Moisture diffused and penetrated from inside the tire or from a tire surface, or moisture penetrated from a cut part in an outer layer of the tire freely moves in a carcass cord arranged in a radial direction of the tire, degrades an adhesion between cord and rubber, and in an extreme case corrodes and deteriorates the cord itself. Accordingly, a separation of adhesion between cord and rubber or a rupture of cord occurs from a part where strain is the largest in a carcass periphery to form a cause of a serious tire trouble.

Further, gas is generated from a rubber compound during curing, when a cavity between core and sheath works as a passage of the gas, and the gas bursts out to a carcass end where curing is relatively slow and forms a large void in this part. This void disappears as curing proceeds, but in order to completely extinguish the void, an unnecessarily large pressure needs to be applied during curing and greatly increase an energy cost. This way, in the prior art wastes such as an energy loss, a decrease in productivity and an extra facility arise to simply extinguish the void. To remove these wastes, removal of air from hollow parts in the step of twisted wire before rolling the steel cord to a tire component member is effective.

As means for removing air from the hollow part of the steel cord, it is considered to insert a core material, such as a vulcanized rubber string or an organic fiber into a core of a cord. However, since a interface strength of the core material and a matrix rubber covering the twisted wire is lowered in this method, under repeated strains, separation thereof may occur at an interface part to form cracks near the cord and lead to a product defect. A method to fill the hollow part by dissolving the matrix rubber in an organic solvent and dipping the cord in it can also be considered, but in the light of the recent environmental issue, use of a solvent in production process is not desirable. Besides, this method takes a long time for drying by vaporizing the solvent after dipping and greatly lowers the productivity. Further, a method to ease the insertion of rubber into the hollow part by reducing a number of wires of the steel cord compared with usual to form a twisted wire structure having an asymmetrical cross section, which lowers a bending resistance of the produced tire, is not favorable depending on a position where the steel cord is used.

On the other hand, a belt part of a radial tire for an automobile or of a radial tire for heavy load is close to a tread and prone to a failure during running due to a piercing object like a nail, tends to allow invasion of moisture from the outside through this part, corrodes the steel cord, and cause separation due to a decrease in adhesion with the rubber by rupture of the cord and the moisture. Further, a side reinforcing part is relatively free of damage compared with the belt part, but when a cut reaching the cord occurred due to a vehicle running on a curb, the same cord rupture and separation as above may occur.

In order to make up for such shortcomings, studies were made about the steel cord structure and generally a structure for preventing hollow parts in steel cord is applied to. That is, a structure such that a matrix rubber that surrounds the hollow part of steel cord enters and fill the hollow part is adopted.

As steel cords meeting this object, conventionally two types are adopted. One which is called the open cord structure aims to secure gaps of steel wires by intentionally twisting them loosely and leave no hollow part in steel cord of a produced tire by filling a low-viscosity, unvulcanized rubber into the hollow part of the cord. For example, an open structure with a 1x5 twist structure is typically mentioned. Another one is a structure that easily allows rubber to penetrate into all gaps between wires by making a cord structure with an outer wire wound spirally around a core formed with a few (1 or 2) steel wires, as represented by a 2+2 twist structure.

However, while said steel cords have great effects in penetrating rubber, they each have the following defects:

The open cord loosens the twist so as to form gaps between wires, but because of this, the steel cord of produced tire easily expands when a tensile stress is applied to, compared to the steel cord with tightly twisted wires. In particular, in case of running with a heavy load or at a high speed, a large stress is applied to wires and the cord tends to deform. By this, an outer periphery of tire grows larger than a status under a stop condition, and the deformation promotes separation between belt layers and lowers the durability of tire.

Further, the open cord fills the hollow part of cord by the low-viscosity rubber that flows during curing, but the rubber does not fill the hollow part sufficiently during rolling and forming to a tire component member, leaving this part as a large cavity. The cavity is larger compared to the tightly twisted cord. Thus, air existing in said cavity is driven out by the rubber entering during curing, but a deadlocked air is sent to a part where the progress of curing is slow and forms a large void there. The void disappears by a vulcanizing pressure, but to completely extinguish the void, a more than necessary large pressure needs to be given during curing, lowering the energy efficiency.

On the other hand, for the rubber penetration structure as represented by the 2+2 twist structure, the cross-sectional structure becomes irregular so as to secure a passage for the rubber to penetrate. Originally, steel wires composing the cord desirably be arranged clearly coaxially, and by this a strain that occurs in wire surfaces when the tire is subjected to a deformation during running can be made most uniform. Whereas, since a steel cord having an irregular cross-sectional structure generates a large surface strain in certain wires, a rupture tends to occur in the cord when the tire is under a large burden. Further, in case of a steel cord like this, since the rubber does not penetrate thoroughly into wire gaps in the phase of rolling or forming into a tire component member, forming a void during curing, though not so much as the case of open cord, the energy efficiency of curing is not good.

That is, a steel cord for a tire is ideal as steel cord for used with a belt member and a side reinforcing member when hollow parts of the cord are already filled with rubber in the phase of rolling or forming into a tire component member, the cord has a clear, coaxial cross-sectional structure, and wire gaps are small and do not cause big deformations during running.

To obtain such a cord, a method to fill hollow parts by dissolving a rubber of a type with a matrix rubber in an organic solvent, dipping a cord in it, filling the inside with a liquefied dissolving rubber by untwisting the cord a little, and filling the hollow parts by vaporizing the remaining solvent is also proposed, but in the light of the recent environmental issue, use of a solvent in production process is not desirable. Besides, this method takes a long time for drying by vaporizing the solvent after dipping and greatly lowers the productivity.

Summary of the Invention

EP-A-1 033 435 describes a composite cord comprising a high polymer core and 18 steel filaments arranged around this core. The polymer core comprises polyethylene filaments.

The object of the present invention is to provide a steel cord for a tire with a 1xN twist structure enabling improvements to increase a fatigue resistance of the cord itself and separation durability in the tire and improve the energy efficiency during curing of the tire and a radial tire using the same.

A steel cord for a tire of the present invention to attain said object comprises a steel cord having the 1xN twist structure containing n pieces of wires, wherein a thermoplastic elastomer compound is filled into a space at a cord center surrounded by said N pieces of wires.

As described above, since structurally no hollow part is present in the steel cord itself by filling the space at the cord center with a thermoplastic elastomer compound in the phase of cord before rolling to a tire component member, unlike the generally called open structure, it is possible to increase the number of twists of the cord. As a result, since wire gaps are made small, it is possible to reduce a cord deformation under a load, control the growth of an outer periphery of a belt member and the like due to tire running and improve a separation durability as tire.

Further, since a cross-sectional shape of the steel cord is made coaxial and no big strain easily occurs in specific wire surfaces, it is possible to improve a fatigue resistance of cord in a belt member or side reinforcing member of the tire.

Further, since structurally no hollow part is present in the steel cord itself, it is possible to improve the energy efficiency of curing by reducing a pressure when curing a tire using this.

In said steel cord with the 1xN twist structure, it is preferable that, when the cross-section area per wire is d, the cross-section area of an inscribed circle is $D_3$ and the cross-section area of a circumscribed circle to N pieces of wires is $D_4$, the coverd cross-section area X by a thermoplastic elastomer compound is within the range of $D_3 < X < D_4 - (d \times N)$. When this cross-section area of coverage X satisfies said relationship, it is possible to thoroughly fill hollow parts of the steel cord with the unvulcanized rubber compound or the thermoplastic elastomer compound. -

According to the present invention, a radial tire using at least one of a belt member and side reinforcing member, formed with rubber-covered steel cords having said 1 xN twist structure, is provided.

Brief Description of the Drawings

Fig.1 is a partial cross-section showing a radial tire for a heavy load as an embodiment of the present invention.
Fig.2 is a partial cross-section showing a radial tire as another embodiment of the present invention.
Fig.3 is a cross-section showing a steel cord with a 1 xN twist structure using the embodiment of the present invention.
Fig.4 is a cross-section showing a steel cord with a 1 xN twist structure using the other embodiment of the present invention.

Detailed Description of the Preferred Embodiments

Compositions of the present invention will be described below by referencing the attached drawings.

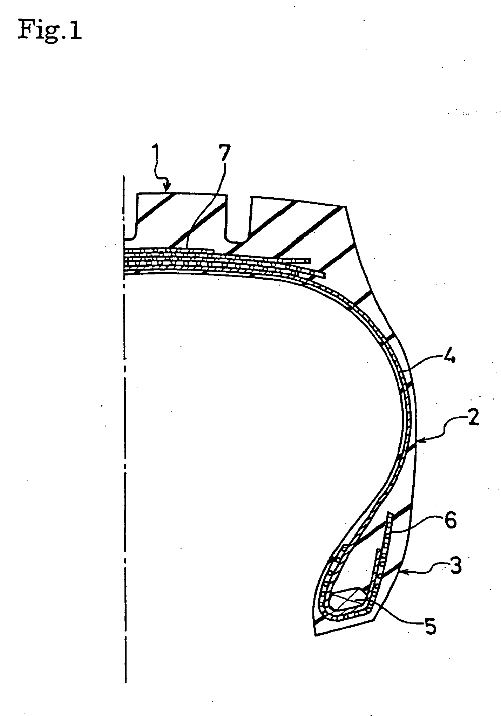

Fig.1 shows a radial tire for a heavy load as an embodiment according to the present invention. In Fig.1, 1 is a tread part, 2 is a sidewall part and 3 is a bead part. A carcass layer 4 (carcass member) is arranged, between a pair of beads 3, 3, and its end part in the tire width direction is wound up outward from the inside of the tire around a bead core 5. Moreover, in the bead part 3, a bead reinforcing layer 6 (finishing member), extending outward from the inside of the tire along the carcass layer 4 so as to wrap the bead core 5, is embedded. On the outer periphery side of the carcass layer 4 in tread part 1, a plurality of belt layers 7 (belt member) are embedded.

In the above-mentioned radial tire for a heavy load, a material, arranged with a plurality of steel cords each having an m+n twist structure comprising a core containing m pieces of wires and a sheath containing n pieces of wires and covered with matrix rubber, is used for the carcass member, finishing member and the belt member.

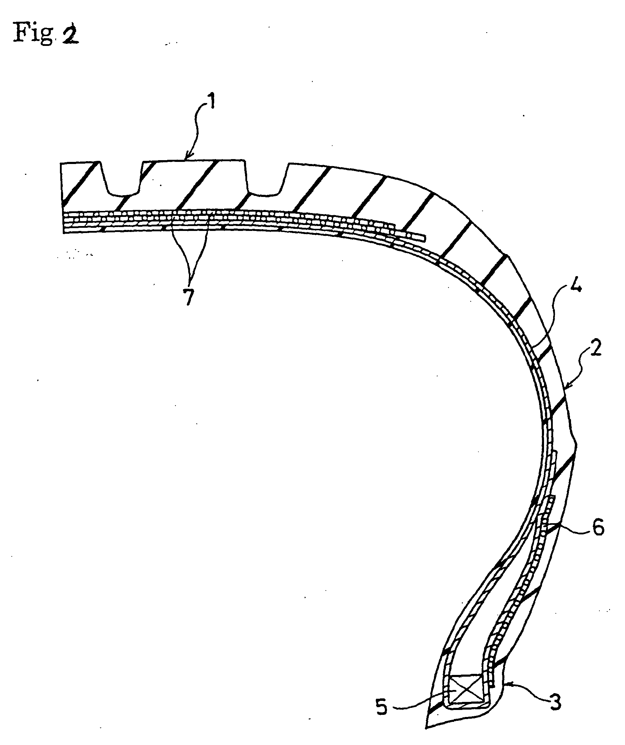

Fig.2 shows a radial tire of the present invention. In Fig.2, 1 is a tread part, 2 is a sidewall part and 3 is a bead part. A carcass layer 4 is arranged between a pair of beads 3, 3, and its end part in the tire width direction is wound up outward from the inside of the tire around a bead core 5. Further, in a zone between the sidewall part 2 and the bead part 3, a side reinforcing layer 6 (side reinforcing member), extending along the carcass layer 4, is embedded. On the outer periphery side of the carcass layer 4 in tread part 1, a plurality of belt layers 7 (belt member) is embedded.

In the above-mentioned radial tire, a material, arranged with a plurality of steel cords each having a 1xN twist structure containing N pieces of wires and covered with a matrix rubber, is used for the belt member and the side reinforcing member.

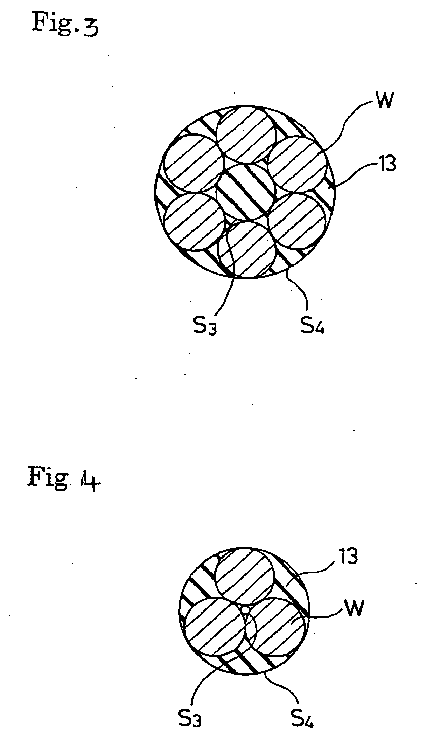

Fig.3 and Fig.4 show respectively the above-mentioned steel cord with the 1xN twist structure. As shown in Fig.3 and Fig.4, this steel cord has the 1xN twist structure tightly twisting N pieces of the wire W to an extent they contact each other. Further, a space at a cord center surrounded by N pieces of wires is filled with a packing 13, which is formed with a thermoplastic elastomer compound.

By filling hollow parts of twist structure of the steel cord with a thermoplastic elastomer compound in this way, the following work effects can be obtained:

First, since wire gaps are made small, it is possible to reduce a cord deformation under a load, control the growth of an outer periphery of a belt member and the like due to tire running of the tire and improve a separation durability as tire.

Secondly, since a cross-sectional shape of the steel cord is made coaxial and no big strain easily occurs in specific wire surfaces, it is possible to improve a fatigue resistance of cord in a belt member or side reinforcing member of the tire.

Thirdly, since structurally no hollow part is present in the steel cord itself, it is possible to improve the energy efficiency of curing by reducing a pressure when curing a tire using this.

Here, when the cross-section area per wire is d (mm$^2$), the cross-section area of an inscribed circle $S_3$ is $D_3$ (mm$^2$) and the cross-section area of a circumscribed circle $S_4$ to N pieces of wires is $D_4$ (mm$^2$), the coverd cross-section area X (mm$^2$) by an unvulcanized rubber compound or a thermoplastic elastomer compound should be set to satisfy the equation (2) below:

$$D_3 < X < D_4 - [d \times N] \qquad (2)$$

That is, when the packing filling the space at the cord center has an adhesion same as the adhesion of the matrix rubber covering the steel cord, the adhesion between the cord and the matrix rubber is not spoiled even if the packing overflows from the cord. However, when a rubber compound or a thermoplastic elastomer compound having a lower adhesion is used as packing for reasons of workability of the core coverage and so on, there is a limit on the amount of overflow from the cord. Further, even if the packing as no problem about the adhesion, as an excessive overflow from the cord would cause adhesion of cords in the winding process after the cord preparation and greatly impede the covering operation of the matrix rubber, there is an upper limit on the amount of packing from this point as well. On the other hand, since a sufficient effect cannot be obtained when the amount of packing is not enough and the space at the cord center cannot be filled, there is a lower limit on the amount of packing.

Thus, when the coverd cross-section area X by the unvulcanized rubber compound or the thermoplastic elastomer compound satisfies the above mentioned (2), the thermoplastic elastomer compound is filled properly into the hollow part of the steel cord.

Incidentally, although the preparation method of the above-mentioned steel cord is not specially specified, in the case of a non-core 1 xN twist structure, for example, a method as to inject a thermoplastic elastomer compound into the cord center immediately before twisting is recommended. Further, to guide the packing to the space at the cord center, a guide cord, on which the packing is applied, made of a organic fiber and the like and having a diameter smaller than the space may be used. Or, when a thermoplastic elastomer compound having a strength to allow processing at normal temperatures and causing plastic deformation at a curing temperature is selected, it is possible to twist N pieces of wires around a core material, namely a thread made of the thermoplastic elastomer compound with a thickness equivalent to the cross-section area of the cord space.

A thermoplastic elastomer compound, preferably one having a structure in which an elastomer is scattered as a noncontinuous phase in a matrix of a thermoplastic resin be used, and the thermoplastic resin itself may also be used.

As the thermoplastic resin, for example, polyamide resin [such as nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6, nylon 6T, nylon 6/6T copolymer, nylon 66/PP copolymer, nylon 66/PPS copolymer], polyester resin [such as polybutylene terephthalate (PBT), polyethylene terephthalate (PET), polyethylene isophthalate (PEI), polybutylene terephthalate/tetramethyleneglycol copolymer, PET/PEI copolymer, polyallylate (PAR), polybutylene naphthalate (PBN)], polynitrile resin [such as polyacrylonitrile (PAN), polymethacrylonitrile, acrylonitrile/styrene copolymer (AS), methacrylonitrile/styrene copolymer, methacrylonitrile/styrene/butadiene copolymer], poly(metha)acrylate resins [such as polymethacrylic acid methyl (PMMA), polymethacrylic acid ethyl, ethylene ethylacrylate copolymer (EEA), ethylene acrylic acid copolymer (EAA), ethylene methylacrylate resin (EMA)], polyvinyl resin [such as vinyl acetate (EVA), polyvinyl alcohol (PVA), vinyl alcohol/ethylene copolymer (EVOH), polyvinylidene chloride (PVDC), polyvinyl chloride (PVC), vinyl chloride/vinylidene chloride copolymer, vinylidene chloride/methylacrylate copolymer], cellulosic resin [such as cellulose acetate, cellulose acetate butylate], fluororesin [such as polyvinylidene fluoride (PVDF), polyvinyl fluoride (PVF), polychlorofluoroetylene (PCTFE), tetrafluoroethylene/ethylene copolymer (ETFE)] and an imide resin [such as aromatic polyimide (PI)] can be mentioned.

As the elastomer scattered in the matrix of thermoplastic resin, for example, diene rubber and its hydrogenate [such as NR, IR, epoxy natural rubber, SBR, BR (high-cis and low-cis BR), NBR, hydro-NBR, hydro-SBR], an olefin rubber [such as, ethylenpropylene rubber (EPDM, EPM), modified maleic ethylenpropylene rubber (M-EPM)], isobutylene-isoprene rubber (IIR), isobutylene and aromatic vinyl or diene monomer copolymer, acrylic rubber (ACM), ionomer, halogen rubber [such as, Br-IIR, CI-IIR, brominate of isobutylene-paramethylstyrene copolymer (Br-IPMS), chloroprene rubber (CR), hydrin rubber (CHC, CHR), chlorosulfonated polyethylene (CSM), chlorinated polyethylene (CM), modified maleic chlorinated polyethylene (M-CM), silicone rubber [such as, methylvinyl silicone rubber, dimethyl silicone rubber, methylphenylvinly silicone rubber], sulfur rubber [such as, polysulfide rubber], fluororubber [such as, vinylidene fluoride rubber, fluorovinylether rubber, tetrafluoroetylenepropyrene rubber, fluorosilicone rubber, fluorophosphazene rubber], thermoplastic elastomer [such as, styrene elastomer, olefin elastomer, polyester elastomer, urethane elastomer, polyamide elastomer] can be mentioned.

Example

About steel cords (3+9x0.22+w) of embodiments 1 to 11 and prior art 1, changes in fatigue rupture life by moisture absorption, changes in cord-rubber adhesion, the curing pressure reducing effect and the cord unwinding workability were evaluated by the following methods, and results are shown in Table 1.

However, in the above-mentioned steel cords, $D_1 - (d \times m) = 0.062 mm^2$ and $D_2 - [d \times (m + n)] = 0.236 mm^2$. As for the cord packing, for embodiments 1 to 7, an unvulcanized rubber compound (A) using mainly a natural rubber was used, and for embodiments 8 to 11, a thermoplastic elastomer compound (B) with a vulcanized powder of isobutylene-isoprene rubber scattered in a matrix formed with a nylon resin was used.

Changes in fatigue rupture life by moisture absorption:

Testpieces were each prepared by embedding three cords in a 10 mm wide, 5 mm thick and 1000 mm long rubber block along the length direction, and these testpieces, with cord ends left exposed, were aged by leaving under the conditions of 70˚C and 98%RH in an oven for seven days. Before and after aging, testpieces were set to a three-roller fatigue tester, and the rupture life was measured under the conditions of 25 mm in roller diameter and 20 kg in tension. Moreover, from the rupture life before aging To and that after aging T, the life reduction index [(logT/logTo) x 100] was determined. The life reduction index means that the life reduction by moisture absorption is little when the life reduction index is large.

Changes in cord-rubber adhesion by moisture absorption:

After aging by leaving the above-mentioned testpieces under the conditions of 70˚C and 98%RH in an oven for seven days, a drawing test was held according to the ASTM method and the rubber adhesion rate (%) was measured. The rubber adhesion rate means that the reduction of adhesion by moisture absorption is little when the rubber adhesion rate is large.

Curing pressure reducing effect:

By molding green tires using steel cords as the carcass cords, these green tires were cured under a pressure of 15 $kg/cm_2$, and the condition of void generation was observed at the carcass turn up part of each cured tire. The result of evaluation was shown as: "0" when there is no void at all, "Small" when relatively small voids are present, and "Large" when relatively large voids are present.

Cord unwinding workability:

The workability of the steel cord densely wound to a creel was evaluated. The result of evaluation was shown as: "○" when the workability is good, "Δ" when the workability is lowered a little, and "×" when the workability is greatly lowered due to adhesion of cords.

Table 1

| | Prior Art 1 | Embodiments | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Cross-section area of coverage (mm$^2$) | 0 | 0.070 | 0.100 | 0.150 | 0.220 | 0.300 | 0.050 | 0.020 | 0.100 | 0.150 | 0.250 | 0.050 |
| Cord packing | --- | A | A | A | A | A | A | A | B | B | B | B |
| Life reduction index | 30 | 60 | 75 | 75 | 75 | 75 | 50 | 45 | 60 | 70 | 50 | 50 |
| Rubber adhesion rate (%) | 50 | 90 | 100 | 100 | 100 | 100 | 80 | 70 | 90 | 90 | 40 | 70 |
| Void generation | Large | 0 | 0 | 0 | 0 | 0 | Small | Small | 0 | 0 | 0 | Small |
| Cord unwinding workability | ○ | ○ | ○ | ○ | Δ | × | ○ | ○ | ○ | ○ | Δ | ○ |

EP 1 602 780 B1

As indicated by Table 1, each of embodiments 1 to 11 of the present invention showed that the reduction of life and adhesion due to moisture absorption was small as well as void generation was little, compared to prior art 1. In particular, for embodiments 1 to 4, 8 and 9 of which the coverd cross-section area X was within the range of 0.062 mm$^2$ to 0.236 mm$^2$, noticeable work effects were obtained.

According to the present invention, since an unvulcanized rubber compound or a thermoplastic elastomer compound is filled into a space between the core and the sheath in the steel cord having the m+n twist structure comprising the core containing m pieces of wires and the sheath containing n pieces of wires, it is possible to increase a corrosion resistance and durability of a completed tire product and improve the energy efficiency during curing of the tire.

Next, radial tires with a tire size of 195/65R15 were prepared using steel cords of embodiments 21 to 28 of the present invention and prior arts 21 and 22, the anti-belt separation resistance, the anti-belt cord breakage resistance, the curing pressure reducing effect and the cord unwinding workability were evaluated by the following methods, and results are shown in Table 2.

However, prior art 21 is of a 1x6x0.25 open cord structure and prior art 22 is of a 2+2x0.28 twist structure, while embodiments 21 to 28 are of a tight 1x6x0.25 twist structure as shown in Fig.4. In the steel cords of embodiments 21 to 28, $D_3$ = 0.049 mm$^2$ and $D_4$ - (d x N) = 0.148 mm$^2$. Further, as for the cord packing, for embodiments 21 to 25, the unvulcanized rubber compound (A) using mainly the natural rubber was used, and for embodiments 26 to 28, the thermoplastic elastomer compound (B) with the vulcanized powder of isobutylene-isoprene rubber scattered in a matrix formed with the nylon resin was used.

Anti-belt separation resistance:

As a substitute characteristic of the anti-belt separation resistance, the high-speed durability was evaluated. That is, after finishing a high-speed durability test of JIS-D4230 using a drum tester with a drum diameter of 1707 mm, tires were tested till they were broken by accelerating the speed at a rate of 10 km/h every 30 minutes and the running distance was measured. Results of evaluation are shown by index with tire 21 of the prior art as 100. The index means that the anti-belt separation resistance is good when the index value is large.

Anti-belt cord breakage resistance:

Applying a maximum load using the standard rim mentioned in the JATMA Yearbook (FY 2000 edition), a test to perform 1000 turns under the condition of a maximum lateral acceleration of 1G during turning, by tracing the Lemniscate curve r = a$\sqrt{\cos 2\theta}$ , a = 20 m, was done and then the number of broken cords of the belt layer was measured.

Curing pressure reducing effect:

Green tires were cured under a pressure of 15 kg/cm$^2$, and the condition of void generation was observed at the belt layer of each cured tire. The result of evaluation was shown as: "0" when there is no void at all, "Small" when relatively small voids are present, and "Large" when relatively large voids are present.

Cord unwinding workability:

The workability of the steel cord densely wound to a creel was evaluated. The result of evaluation was shown as: "○" when the workability is good, "∆" when the workability is lowered a little, and "×" when the workability is greatly lowered due to adhesion of cords.

Table 2

| | Prior Art 21 | Embodiments | | | | | | | | Prior Art 22 |
|---|---|---|---|---|---|---|---|---|---|---|
| | | 21 | 22 | 23 | 24 | 25 | 26 | 27 | 28 | |
| Cross-section area of coverage (mm$^2$) | 0 | 0.050 | 0.070 | 0.140 | 0.020 | 0.170 | 0.070 | 0.160 | 0.200 | 0 |
| Cord packing | --- | A | A | A | A | A | B | B | B | --- |

(continued)

| | Prior Art 21 | Embodiments | | | | | | | | Prior Art 22 |
|---|---|---|---|---|---|---|---|---|---|---|
| | | 21 | 22 | 23 | 24 | 25 | 26 | 27 | 28 | |
| High-speed durability (index) | 100 | 110 | 105 | 110 | 103 | 110 | 110 | 105 | 103 | 105 |
| Broken belt cords (pieces) | 5 | 0 | 0 | 0 | 3 | 0 | 0 | 3 | 3 | 20 |
| Void generation | Large | 0 | 0 | 0 | Small | 0 | 0 | 0 | Small | Small |
| Cord unwinding workability | ○ | ○ | ○ | Δ | ○ | × | ○ | × | ○ | ○ |

As indicated by Table 2, each of embodiments 21 to 28 of the present invention obtained good anti-belt separation resistance and good anti-belt cord breakage resistance as well as void generation was little, compared to prior art 21 (open cord structure). In particular, for embodiments 21 to 23 and 26 of which the coverd cross-section area X was within the range of 0.049 mm$^2$ to 0.148 mm$^2$, noticeable work effects were obtained. Incidentally, in prior art 21 (2+2 twist structure), many belt cords were broken.

According to the present invention, since a thermoplastic elastomer compound is filled into a space at the cord center surrounded by N pieces of wires in the steel cord having the 1 xN twist structure containing N pieces of wires, it is possible to increase the fatigue resistance of cord itself and the separation resistance as tire, and improve the energy efficiency during curing of the tire.

The preferred embodiments of the present invention were described in detail as above, however, it should be understood that various modifications, substitutions and replacements can be made to these, within the scope of the present invention as stated in attached claims.

## Claims

1.　A steel cord for a tire with the 1xN twist structure containing N pieces of wires, wherein a thermoplastic elastomer compound is filled into a space at a cord center surrounded by said N pieces of wires, wherein the thermoplastic elastomer compound has a structure in which an elastomer is scattered as a noncontinuous phase in a matrix of a thermoplastic resin.

2.　A steel cored for a tire as claimed in claim 1, wherein, when the cross-section area per wire of said wire is d, the cross-section area of an inscribed circle to said N pieces of wires is $D_3$ and the cross-section area of a circumscribed circle to said N pieces of wires is $D_4$, the covered cross-section area X by said thermoplastic elastomer compound is within the range of $D_3<X<D_4-(d \times N)$.

3.　A radial tire using at least one of a belt member and side reinforcing member, each comprising steel cords as claimed in claims 1 or 2 covered with rubber.

## Patentansprüche

1.　Stahlcord für einen Reifen mit der 1xN-Twist-Struktur, umfassend N-Stücke von Drähten, worin eine thermoplastische Elastomerverbindung in einen Raum bei einem Cordzentrum gefüllt ist, das durch die N-Stücke der Drähte umgeben ist, worin die thermoplastische Elastomerverbindung eine Struktur aufweist, worin ein Elastomer als nichtkontinuierliche Phase in einer Matrix aus einem thermoplastischen Harz gestreut ist.

2.　Stahlcord für einen Reifen nach Anspruch 1, worin dann, wenn die Querschnittsfläche pro Draht des Drahtes d ist, die Querschnittsfläche eines umschriebenen Kreises zu den N-Stücken der Drähten $D_3$ ist und die Querschnittsfläche eines umgebenden Kreises für die N-Stücke der Drähte $D_4$ ist, die bedeckte Querschnittsfläche X durch die thermoplastische Elastomerverbindung innerhalb des Bereiches von D3<X<D4-(d x N) ist.

3. Radialreifen unter Verwendung von zumindest einem Mantelelement und einem Seitenverstärkungsteil, die jeweils den Stahlcord nach den Ansprüchen 1 oder 2, bedeckt mit Gummi, umfassen.

**Revendications**

1. Câble d'acier pour pneumatique possédant une structure de torsion 1xN contenant N fils, dans lequel on introduit un composé élastomère thermoplastique dans un espace au centre du câble entouré desdits N fils, le composé élastomère thermoplastique possédant une structure dans laquelle un élastomère est dispersé en phase discontinue dans une matrice de résine thermoplastique.

2. Câble d'acier pour pneumatique selon la revendication 1, dans lequel, l'aire de section transversale par fil dudit fil étant d, l'aire de section transversale d'un cercle inscrit auxdits N fils étant $D_3$ et l'aire dé section transversale d'un cercle circonscrit auxdits N fils étant $D_4$, l'aire de section transversale X recouverte par ledit composé élastomère thermoplastique est comprise dans la plage de $D_3 < X < D_4 - (d \times N)$.

3. Pneumatique radial utilisant au moins soit un élément de ceinture, soit un élément de renforcement latéral, chacun comprenant des câbles d'acier selon les revendications 1 ou 2, recouverts de caoutchouc.

Fig.1

Fig 2

Fig.3

Fig. 4

**EP 1 602 780 B1**

**Patent documents cited in the description**

- EP 1033435 A